# EUROPEAN PATENT SPECIFICATION

(11) **EP 1 532 791 B1**
(45) Date of publication and mention of the grant of the patent: **15.08.2007**
(21) Application number: 02772190.1
(22) Date of filing: 22.08.2002
(51) Int. Cl.: H04L 29/06

(54) **RECONFIGURATION OF A GROUP OF NETWORK NODES IN AN AD-HOC NETWORK**
REKONFIGURATION EINER GRUPPE VON NETZKNOTEN IN EINEM AD-HOC NETZWERK
RECONFIGURATION D'UN GROUPE DE NOEUDS DE RESEAU DANS UN RESEAU AD HOC

(43) Date of publication of application: 25.05.2005
(73) Proprietor: NTT DoCoMo, Inc., Tokyo 100-6150 (JP)
(72) Inventor: PREHOFER, Christian, 81477 München (DE); SOUVILLE, Bertrand, D-85368 Moosburg (DE)
(74) Representative: HOFFMANN EITLE
(86) International application number: PCT/EP2002/009402
(87) International publication number: WO 2004/019582

(56) References cited:
- WO-A-01/14968
- WO-A-01/84792
- US-A- 5 699 275
- US-A- 6 113 652
- US-A- 6 141 683
- US-A1- 2001 029 178

## Description

### FIELD OF INVENTION

The present invention relates to a reconfiguration of a group of network nodes in an ad-hoc network, and in particular to a reconfiguration of a group of network nodes in an ad-hoc network with particular emphasis on reconfiguration consistency.

### BACKGROUND ART

In WO 01/14968 A1 there is described a fieldbus upgradable apparatus and method, wherein control devices residing on a fieldbus communications network are modified without interrupting the operation of the control devices in a seamless manner.

In US-A-6,113,652 there is described a communication network equipment capable of non-disruptive software upgrade which is used in a telecommunications network having a plurality of coupled nodes and a network controller coupled to at least one of these nodes.

Further, in US-6,141,683 A there is described a method for remotely and reliably updating the software on a computer with provision for roll-back with particular focus on integrity between different software versions.

Further, in US-A-5,699,275 there is described a system and method for remote patching of operating code located in a mobile unit, wherein a manager host is operable to initiate transmission through a communication network of at least one discrete patch message defining at least one patch.

Further, in US-2001/0029178 A1 there is described a wireless software update with version control in a wireless communication system having a system backbone, having a host computer coupled to the system backbone, at least one base station coupled to the system backbone, and a plurality of mobile devices within the system.

Further, in WO 01/84792 A1 there is described a method and gateway for performing an online switching of software in a communication system.

Overall, numerous factors associated with technology, business, regulation and social behavior have driven the spreading of wireless ad-hoc networking in the past, i.e., a wireless network formed without any central administration. Ad-hoc networks consist of a plurality of mobile devices using a wireless interface for exchange of packet data. As each mobile device in the ad-hoc network serves as router and host, each such mobile device will forward data packets on behalf of other mobile devices and further run user applications. Therefore, in ad-hoc networks, mobile devices are connected directly for local cooperation.

To support on-going improvement of functionality, an ad-hoc network should provide the opportunity for a software update. It is often required that all mobile devices in such an ad-hoc network have the same software version, e.g., for reasons of compatibility. For this reason, the software update should take place in a coordinated manner, preferably at the same point in time. In addition, either all mobile devices reconfigure successfully, or they all fall back to the software version before installation.

However, up to now no appropriate approach to the coordinated update of software in ad-hoc networks is available. Another issue not addressed so far is that during reconfiguration mobile devices may not communicate properly.

### SUMMARY OF INVENTION

In view of the above, the object of the present invention is to provide a solution to consistent software reconfiguration in ad-hoc networks.

According to the present invention, this object is achieved through a method, as defined in claim 1, of reconfiguration for a network node, e.g., a mobile device or a stationary device, in an ad-hoc network. Additionally a network node for operation in a ad-hoc network is defined in the independent claim 12. The method comprises a first step of preparing a transition from an initial software configuration to a target software configuration and a second step to deciding on commitment to the target software configuration. According to the present invention, the decision on commitment is taken in view of a result of reconfiguration indicated through at least one further network node in the ad-hoc network, in particular when every result of configuration received at the network node from a reachable further network node is evaluated to be positive.

Therefore, according to the present invention, a transition from an initial software configuration to a target software configuration is not executed anyway but such a transition is taken on the basis of information being related to reconfiguration at network nodes being reachable from the network node deciding on commitment to the target software configuration.

In particular, if the information received is related to further reconfiguration processes in the further network nodes, it is possible to allow for coordination of reconfiguration between different network nodes, although each single network node is operating autonomously.

In other words, according to the present invention it is proposed to not simply initiate an update process for different network nodes in an ad-hoc network and to just hope that the reconfiguration will be successful, but to use feedback mechanisms locally in each single network node to decide on commitment to target software configurations.

According to a preferred embodiment of the invention it is proposed to negotiate a maximum reconfiguration time period between at least two network nodes executing reconfiguration. The maximum reconfiguration time is the maximum time for reconfiguration, indication of reconfiguration result, and executing a fallback to the initial software configuration for network nodes in the ad-hoc network participating in the reconfiguration process.

Further, preferably, a start of reconfiguration is coordinated between at least two network nodes in the ad-hoc network executing a reconfiguration process. Optionally, one network node in the ad-hoc network may organize the negotiation process.

The negotiation of a maximum time for reconfiguration and the "synchronization" or coordination of start of reconfiguration are of particular relevance for achieving a simple, but nevertheless highly efficient framework of autonomous reconfiguration in each network node.

The negotiation process of a maximum reconfiguration time period is adapted to a heterogeneous update of software within different network nodes, as the maximum time period for reconfiguration will be set according to the target software configuration in thenetwork node requiring the longest time period for reconfiguration.

Yet another advantage is that a time period during which services are interrupted due to reconfiguration at the different network nodes is foreseeable and minimized. If after expiry of the negotiated maximum time period no definitive reconfiguration success is established in the ad-hoc network, immediately counter-measures may be taken to bring the ad-hoc network back to operation on the basis of the initial software configuration before start of the reconfiguration process.

According to a further preferred embodiment of the invention, it is proposed to determine which network nodes are reachable after the reconfiguration process.

This preferred embodiment of the present invention is provided to control two different reconfiguration scenarios.

A first scenario would be that reconfiguration is not related to communication software - e.g., like speech-codec software - but to some type of application. Therefore, during reconfiguration communication is still possible. In such a case, connectivity from the network node executing the reconfiguration process to further network nodes running the reconfiguration process is not an issue.

A second scenario would be that some type of communication-related software is reconfigured so that it may not be guaranteed that the ad-hoc network topology remains unchanged during the course of reconfiguration. One example would be a communication software update failure at a specific network node which leaves the ad-hoc network as it may no longer communicate with those network nodes which successfully reconfigured communication software. Therefore, excluding this network node from the commitment decision - after determination of reachability - allows to avoid over-restrictive commitment decisions and a related decrease in functionality improvement.

Further preferred embodiments of the present invention relate to further decision mechanisms underlying the commitment to a new software configuration in a network node.

A further option relates to the extreme case where no information regarding the outcome of reconfiguration at other network nodes is received at all. In this case - after expiry of the maximum reconfiguration time period - it is proposed to execute a fallback to the initial software configuration. The rationale behind this approach is that, initially, communication was possible on the basis of the initial software configuration. Further, the fact that no reconfiguration result was received at the network node deciding on the commitment to the new software configuration is an indication that communication on the basis of the newly installed software is not possible. Therefore, fallback to the initial software configuration is the optimal way to re-establish connectivity in the ad-hoc network.

Yet another option is to execute a fallback to initial software configuration, when at least one negative reconfiguration result was reported to the network node deciding on commitment to the target software configuration. The rationale behind this commitment decision is to maximize connectivity and communication capability. Assuming that only a single mobile network node could leave the ad-hoc network according to the negative reconfiguration result, it is wise to continue the operation on the basis of the initial software configuration to maintain maximum connectivity.

Further preferred embodiments of the present invention relate to the involvement of a network node into the exchange of reconfiguration results.

According to a preferred embodiment of the present invention, each network node either sends a positive or negative indication of reconfiguration, according to the outcome of the transition from the initial software configuration to the target software configuration.

It should be noted that the exchange of reconfiguration results may be achieved in various ways.

A first way would be to indicate the reconfiguration result through dedicated positive or negative signals. Preferably, these signals may be processed, both, by through the initial software configuration and the target software configuration.

A second way would be to indicate a positive reconfiguration, e.g., of communication software, implicitly through automatic set-up of network connectivity.

For both alternatives given above, the exchange of reconfiguration results may be executed repeatedly to improve penetration of reconfiguration results in the ad-hoc network.

A further preferred embodiment of the present invention relates to the determination of network nodes in the ad-hoc network participating in the reconfiguration process.

Another preferred embodiment of the present invention relates to retrieval of software for executing the transition from the initial software configuration to the target software configuration.

According to a preferred embodiment, software may be retrieved locally from a portable electronic device, e.g., a smart card or any other type of portable device that allows transfer of the related data.

Yet another option is to retrieve software via a mobile communication environment of any type, e.g., from the Internet via a personal area network, a wireless local area network, a wireless infrared communication network, Bluetooth communication, or any other suitable type of mobile communication environment.

Further preferred embodiments of the present invention relate to the type of software which is installed for reconfiguration.

As should be understood from the above, the present invention is not restricted to any type of software. The present invention may be used to reconfigure application software, communication software, operating system software, firmware, etc.

Further, the inventive reconfiguration process is not only related to software as such, but also to related control parameters. Therefore, one might imagine a situation where the software as such remains unchanged and only the parameter controlling the operation of the software are reconfigured in the sense outlined above.

According to another embodiment of the present invention there is provided a computer program product directly loadable into the internal memory of a network node of an ad-hoc network comprising software code portions for performing the inventive reconfiguration process when the product is run on a processor of the network node.

Therefore, the present invention is also provided to achieve an implementation of the inventive method steps on computer or processor systems. In conclusion, such implementation leads to the provision of computer program products for use with a computer system or more specifically a processor comprised in, e.g., a mobile device like a mobile telephone, a laptop computer, or a PDA.

These programs defining the functions of the present invention can be delivered to a computer/processor in many forms, including, but not limited to information permanently stored on non-writable storage media, e.g., read only memory devices such as ROM or CD ROM discs readable by processors or computer I/O attachments; information stored on writable storage media, i.e. floppy discs and harddrives; or information convey to a computer/processor through communication media such as network and/or Internet and/or telephone networks via modems or other interface devices. It should be understood that such media, when carrying processor readable instructions implementing the inventive concept represent alternate embodiments of the present invention.

### BRIEF DESCRIPTION OF DRAWING

The best mode of carrying out the invention as well as preferred embodiments and examples will be explained with reference to the drawing, in which:
- Fig. 1: shows a network topology of an ad-hoc network to which the reconfiguration process according to the present invention is applicable;
- Fig. 2: shows a schematic diagram of a network node according to the present invention;
- Fig. 3: shows a flowchart of operation for the network node shown in Fig. 2;
- Fig. 4: shows a schematic diagram of the software reconfiguration unit shown in Fig. 2;
- Fig. 5: shows a flowchart of operation for different sub-units in the software reconfiguration unit shown in Fig. 4;
- Fig. 6: shows a flowchart of operation for the reconfiguration commitment unit shown in Fig. 2;
- Fig. 7: shows a first example of the reconfiguration process according to the present invention; and
- Fig. 8: shows a second example of the reconfiguration process according to the present invention.

### DESCRIPTION OF BEST MODE AND PREFERRED EMBODIMENTS

In the following, the best mode of carrying out the present invention and preferred embodiments thereof will be explained with respect to the drawing. Throughout the specification, those parts being identical will be referred to using the same reference numerals.

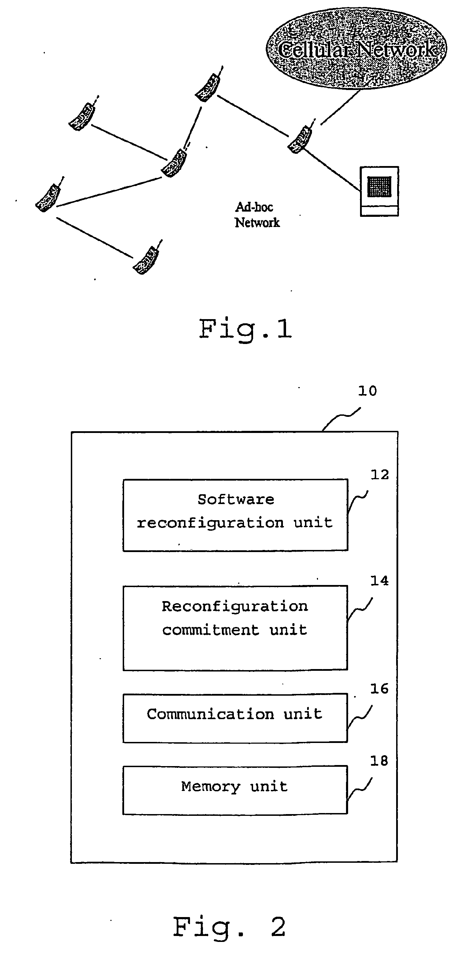

Fig. 1 shows a network topology of an ad-hoc network to which the reconfiguration process according to the present invention is applicable. As outlined above, an ad-hoc network is a network formed without any central administration and consisting of network nodes, e.g., mobile devices or stationary devices, that use wireless interfaces to exchange circuit- or packet-switched data. It should be understood that there is not imposed any restriction either on the type of network node nor on the type of communication in the ad-hoc network according to the present invention.

Examples of network nodes are mobile devices like mobile telephones, PDAs, mp3-players, laptop computers, etc. or stationary devies like personal computers. Further, the type of ad-hoc networking may be suitably selected, e.g., on the basis of Bluetooth, HiperLAN/2, personal area network PAN, IEEE 802.11, WLL Multi-hop Access Systems, according to the MANET initiative taken by the Internet Engineering Task Force IETF.

The same also applies when the ad-hoc network is combined with a mobile cellular communication environment being operated on the basis of, e.g., GSM, PDC, GPRS, UMTS, IMT2000, PHS, IS-95, or any hybrid combination thereof.

Still further, it should be noted that the reconfiguration process explained in the following is suitable for any type of software, such as application software, communication software, firmware, operation system software, and/or related control parameters.

Typical examples - without any binding effect on the present invention - would be mobile Internet application, mobile multi-media application, personalized service application, global mobility support, or any other type of video, still image, audio data, text data, or speech-based application supporting software.

Further, communication-related software may be related, e.g., to speech coding, source coding, channel coding, radio control according to any standard like WCDMA, TDMA, FDMA, etc. Further, communication software may be related to any ad-hoc network routing protocol, e.g., a distance vector routing protocol DSVD, an ad-hoc on-demand distance vector routing protocol AODV, and/or a dynamic source routing protocol. Still further, examples of firmware could be a software which is necessary to run a signal processing unit, e.g., a DSP, which is usually available within a mobile device.

Fig. 2 shows a schematic diagram of a network node according to the present invention.

As shown in Fig. 2, the network node 10 comprises a software reconfiguration unit 12 and a reconfiguration commitment unit 14. Further, for exchange of data in the ad-hoc network there is provided a communication unit 16, and a memory unit 18 allows the storage of any data involved with the operation of the network node 10.

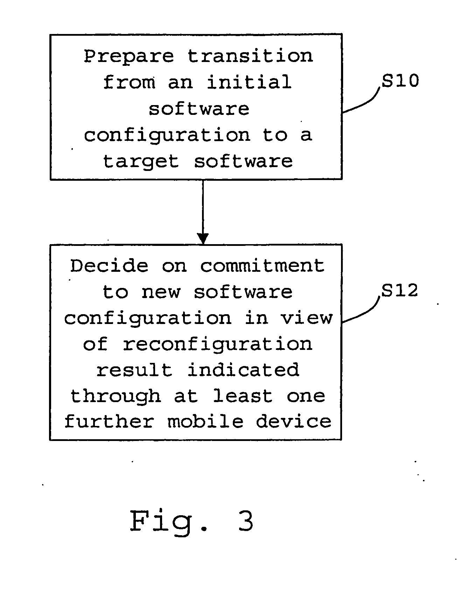

Fig. 3 shows a flowchart of operation for the network node 10 shown in Fig. 2. Operatively, in a step S10, the transition from an initial software configuration to a target software configuration is prepared, and in a step S12 there is taken a decision to commit to the new software configuration in view of a related reconfiguration result indicated through at least one further network node of the ad-hoc network.

Generally, the reconfiguration process is therefore split into two phases, a first one to prepare reconfiguration, and a second one to evaluate the reconfiguration result, to decide on commitment in the new software configuration, and finally to actually commit to the new software or to fall back to the initial software configuration. In the following, further aspects underlying this basis concept of a two-phase reconfiguration process will be discussed in more detail.

Therefore, according to the present invention there is proposed a network node and method of reconfiguration thereof that ensure consistent software update. This means that all network nodes have the same consistent software version .

Within the general framework for a reconfiguration process as outlined above with respect to Figs. 2 and 3, the present invention may be varied in a plurality of ways, as will be outlined in the following.

It is also proposed to determine network nodes in the ad-hoc network executing the reconfiguration at the start of reconfiguration. This is achieved on the basis of at least one criterion: communication capability of a network node; node connectivity; profile data of network node; movement pattern for a mobile network node, i.e. mobile device; hardware status of network node; priority of network node; and/or group membership of network node.

Communication capability may be related to any specific type of communication - i.e., circuit-switched or packet-switched. Here, one might consider an application scenario where software being related to packet-switched communication is exchanged only, so that circuit-switched functionality remains unaffected. Therefore, network ndoes supporting circuit-switched communication only are not affected by the reconfiguration.

In addition, network connectivity in the sense of the present invention implies that only network nodes being integrated into the ad-hoc network should be considered for reconfiguration. Optionally, profile data of network nodes is integrated into the decision of whether a network node will be reconfigured or not, which profile data may describe the type of applications, type of communication services, user preferences, etc.

Still further, the movement pattern as criterion for reconfiguration allows to drop out those mobile network nodes from the reconfiguration process which are in the process of leaving the ad-hoc network anyway. Therefore, an update of such a mobile network node with respect to specific services in the current ad-hoc network becomes obsolete and should be avoided.

Still further, hardware status of the network node is related both to a dynamic hardware status or a static hardware status. A first example for a dynamic hardware status is the energy being available within the network node, e.g., the load state of a mobile device battery. Only if enough energy is available within the network node, the reconfiguration of such a network node is meaningful. Further, only if enough memory for a specific type of application software is available within the network node - as example for a static hardware status - the network node should be reconfigured accordingly.

Still further, additional criteria for determination of reconfiguration are priority of a network node and group membership. Here, priority assignment to a network node allows to exclude specific network nodes from reconfiguration and to have end users receiving privileged services. Group membership allows to set up different groups of network nodes and related end users forming ad-hoc networks and to support organizational aspects.

A further aspect of preparation of a transition from an initial software configuration to a target software configuration is related retrieval of software.

One option supported by the present invention is to download software to one network node being reachable in the ad-hoc network, and then to distribute the software to each.network node participating in the reconfiguration.

Remote retrieval of software - e.g., from the Internet - may be achieved via any type of mobile communication environment, e.g., a mobile communication network, a wireless local area network, a personal area network, wireless infrared communication, and Bluetooth communication. Mobile communication may be executed according to any type of standard, i.e., IMT2000, GSM, PDC, PHS, IS-95.

The reconfiguration supports also heterogeneous software update for different network nodes or, in other words, software reconfiguration may be achieved in a network node specific way. A further option would be to distribute software reconfiguration to at least two network nodes before subsequent distribution within the ad-hoc network.

Yet another option for retrieving of software for reconfiguration would be to use a portable electronic device IC/USIM in a local manner, such that the software necessary for reconfiguration is locally retrieved at eachnetwork node. A modification of this approach would be that the portable electronic device is not only carrying software for a specific network node, but for a plurality of network nodes, and that the network node accommodating the portable electronic device is used for distribution of the software to further network nodes.

Besides software retrieval via a mobile communication environment or a portable electronic device, a further option would be that software necessary for reconfiguration is already pre-installed at a network node and therefore is only to be activated to achieve reconfiguration.

While above for selection of network nodes criteria and software retrieval mechanisms have explained as important aspects of the first step S10 to prepare a transition from an initial software configuration to a target software configuration, in the following, important aspects of the decision on commitment to a new software configuration according to step S12 shown in Fig. 3 will be explained.

The present invention relies on the understanding that the reconfiguration to the target software as such is not enough to provide consistency of functionality of network nodes after reconfiguration. Therefore, in addition to the step of software update as first phase of reconfiguration there is provided a second phase for evaluation of the reconfiguration result(s). The evaluation is a prerequisite to decide on commitment to the target software configuration, and for actual transfer to the new software configuration or establishment of a fallback process in view of the decision result.

In other words, only if a successful reconfiguration is notified within a negotiable maximum time for reconfiguration indication of reconfiguration result, and executing a fallback to the initial software configuration - through different network nodes participating in the reconfiguration process, there will be achieved commitment to target software configuration(s). Otherwise, there will be initiated a fallback to the starting point of reconfiguration to re-establish communication also when the reconfiguration was not successful. This fallback mechanism allows to maintain operability of the different network nodes in the latter case.

Further, the achievement of a reconfiguration process over different network nodes without central control is achieved through exchange of indication of reconfiguration results between network nodes in the ad-hoc network as will be explained in more detail in the following.

When communication is interrupted during preparation of transition to the target software configuration a first option is to await the installation of the target software configuration and to then use the new communication software for configuration result indication. Alternatively - i.e., when reconfiguration is not successful - a fallback to the initial software configuration could be executed after the time period reserved for reconfiguration, and then the previous initial software configuration and related communication software may be used for reconfiguration result indication.

From the viewpoint of mobile device operating autonomously, any mismatch between the communication software after reconfiguration will be an indication to non-successful reconfiguration. To the contrary, a suitable exchange of data also after reconfiguration may be considered as implicit indication of successful reconfiguration without exchange of related dedicated signaling messages.

Further communication may also continue during the reconfiguration process, typically when no communication software is involved in the reconfiguration process. Here, the indication of reconfiguration results is easier and may be executed immediately after termination of the preparation phase at each network node. Therefore, at the end of the time period being available for configuration preparation, the decision of commitment to the new software configuration and/or fallback to the initial software configuration may be taken without any delay.

Optionally, the decision may be taken already before end of the maximum reconfiguration time period when positive reconfiguration indications are received from all involved network nodes before end of the maximum reconfiguration time period.

According to yet another case, a network node may not receive any indication of a reconfiguration result at all, irrespective of whether communication is interrupted during the reconfiguration process or continuously available. In that case, where a network node is completely "blind", the appropriate way is to execute fallback to initial software configuration of the network node before continuation of operation for this network node.

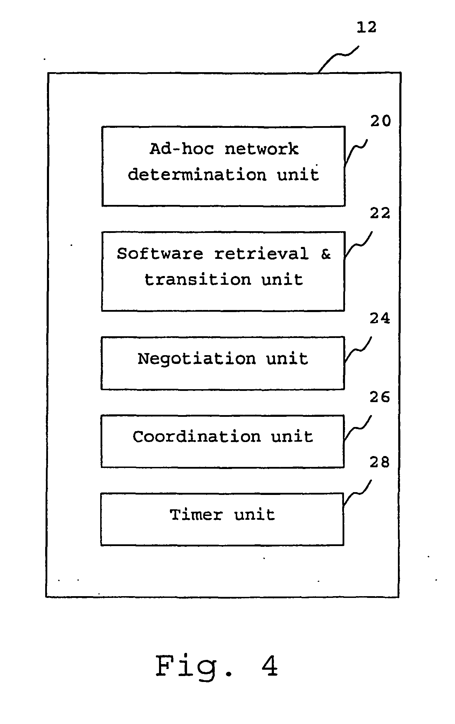

While above general aspects of the present invention have been explained with respect to Figs. 2 and 3, further details thereof will be explained with reference to Figs. 4 to 6, respectively.

Fig. 4 shows a schematic diagram of the software reconfiguration unit shown in Fig. 2.

As shown in Fig. 4, the software reconfiguration unit 12 comprises an ad-hoc network determination unit 20, a software retrieval unit 22, a negotiation unit 24, a coordination unit 26, and a timer unit 28, respectively.

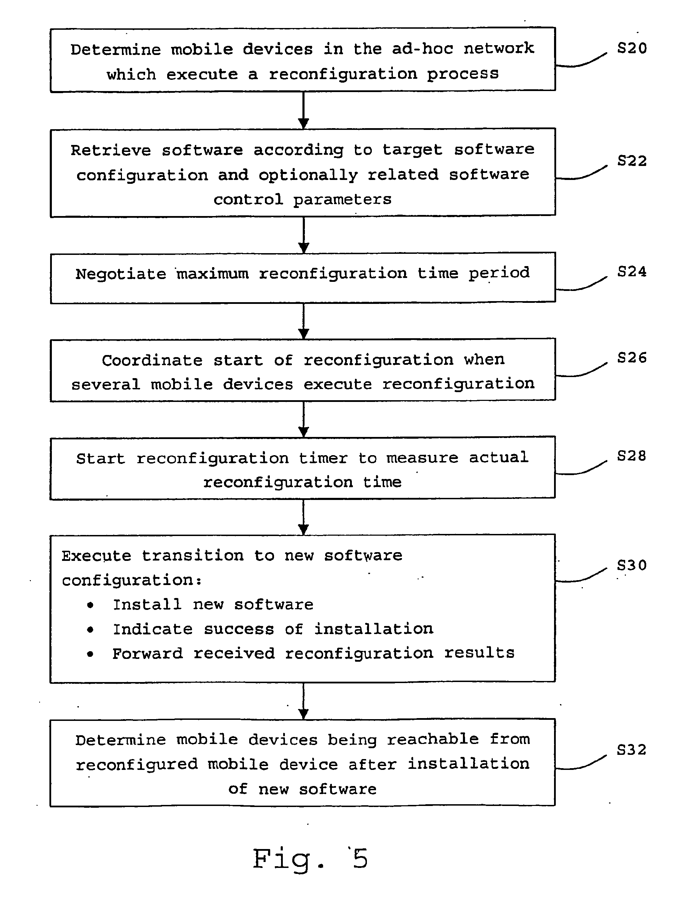

Fig. 5 shows a flowchart of operation of the different sub-units of the software reconfiguration unit 12 as shown in Fig. 4. The steps shown in Fig. 5 are basically related to the time period reserved for preparing the transition from the initial software configuration to the target software configuration.

As shown in Fig. 5, at the beginning of this time period, the ad-hoc network determination unit 20 may determine network nodes in the ad-hoc network which execute a reconfiguration process in step S20 as outlined above. Then, in a step S22 the software retrieval unit will retrieve software according to the target software configuration as outlined above, and optionally also retrieve related software control parameters, e.g., parameters controlling the operation system of a network node.

In a step S24, the negotiation unit may negotiate a maximum reconfiguration time period for the network nodes participating in the reconfiguration process. It should be noted that the maximum reconfiguration time period covers the time period provided for preparation of a transition to the target software state and, optionally a time period for evaluation of reconfiguration results, deciding on commitment on the target software configuration and executing the commitment or a fallback to the initial software configuration according to the determination result.

Then, in a step S26, the coordination unit 28 may coordinate start of reconfiguration, when several network nodes execute reconfiguration such that different network nodes execute reconfiguration over the same time period or, in other words, in a coordinated and/or synchronized way. This is supported through provision of a timer unit 28 which operatively starts a reconfiguration timer to measure the actual reconfiguration time against the negotiated maximum reconfiguration time in step S28.

As shown in Fig. 5, a further step S30 - executed by the software retrieval and transition unit 22 - achieves execution of transition to the new software configuration. Step S30 divides into the sub-steps installation of new software, indication of success of installation, and forwarding of received reconfiguration results. It should be noted that this transition is achieved autonomously in each single network node and that the coordination is achieved through the reception and forwarding of reconfiguration results from further network node.

While each network node is operating autonomously, it is the continuous reception and forwarding of reconfiguration-related information that allows to distribute reconfiguration status information in the ad-hoc network, which then may again be processed autonomously in each mobile device under the ad-hoc networking paradigm.

As shown in Fig. 5, the ad-hoc determination unit 20 may again be activated after reconfiguration to execute step S32 for determination of mobile devices which are reachable from a reconfigured network node after installation of new software and transition to the target software configuration. This step S32 is particularly useful when network nodes are mobile and roam during the reconfiguration process, so that the ad-hoc network topology changes.

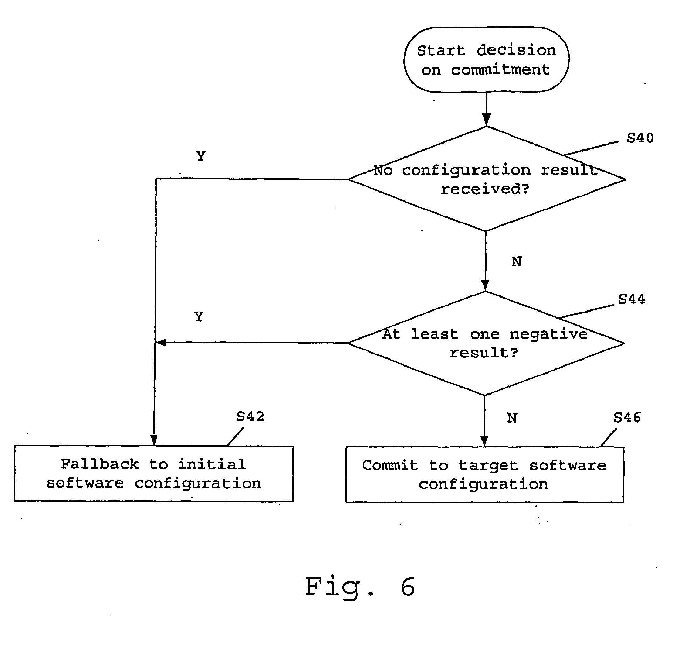

Fig. 6 shows a flowchart of operation for the reconfiguration commitment unit 14 shown in Fig. 2. The operation outlined in this flowchart is related to the operation after the first phase to prepare the transition to the target software configuration or, in other words, after expiration of the timer provided in each network node to compare the actual reconfiguration time with the negotiated maximum negotiation time.

As shown in Fig. 6, after expiration of the time period reserved for preparing the transition to the new software configuration, the reconfiguration commitment unit 14 will evaluate whether a reconfiguration result was received at all in a step S40. If this is not the case, the reconfiguration commitment unit 14 will decide on fallback to initial software configuration in a step S42.

Otherwise, the reconfiguration commitment unit 14 will determine whether at least one negative indication for a reconfiguration was generated during the reconfiguration. If this is true, the reconfirmation commitment will decide on fallback to initial software configuration according to step S42Otherwise, a decision to commit to the target software configuration will be taken in a step S46.

The logic behind the decision mechanism shown in Fig. 6 is that the interrogation whether no reconfiguration was received in step S40 corresponds to a situation where a network node can no longer form part of the ad-hoc network, e.g., due to roaming and moving away of a mobile network node from the area of the ad-hoc network. Here, a commitment to a target software configuration which might only be suitable for network nodes in the ad-hoc network would no longer make sense.

Further, the reason to decide on fallback when at least one negative indication of reconfiguration is indicated is to guarantee interoperability and consistency also after reconfiguration.

However, in an alternative manner and depending on the number of network nodes participating in the reconfiguration and further the type of reconfiguration, one could also consider a modification of the scheme shown in Fig. 6.

E.g., a statistical evaluation of the indicated reconfiguration results using thresholds for acceptable negative reconfiguration level is as well covered by the present invention.

It should also be noted that the ad-hoc network may split into several groups, each of which will have a common state of software version, but not necessarily the same. E.g., in a first group, a network node may have to fall back, and therefore the complete group will execute a fallback to the initial software configuration. To the contrary, the other group may achieve successful reconfiguration for all related network nodes.

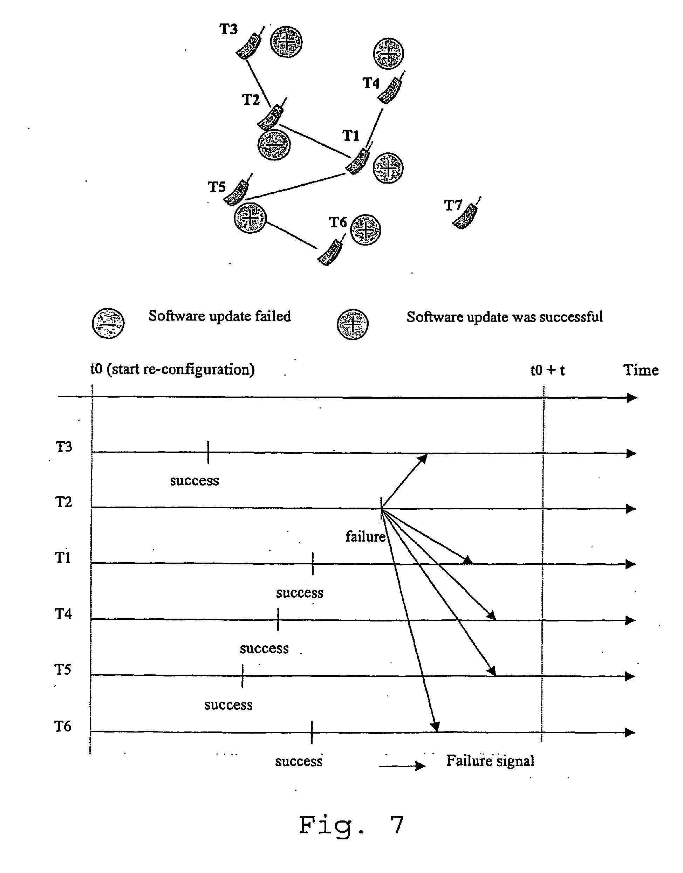

Fig. 7 shows a first example of the application of the reconfiguration process according to the present invention.

For the example shown in Fig. 7 it is assumed that network nodes are mobile devices participating in the reconfiguration process. The mobile devices are not roaming during reconfiguration. Further, it is assumed that the battery of the mobile device T7 is too low, and that therefore this mobile device will not participate in the reconfiguration process.

As shown in Fig. 7, mobile device T1 distributes the software according to the target software configuration for each of the mobile devices T2 to T6. Then, the reconfiguration for all mobile devices takes place, except for mobile device T7.

At the end of the time period t reserved for reconfiguration, the result of reconfiguration is as shown in the lower part of Fig. 7. While mobile devices T3, T1, T4 to T6 execute the reconfiguration process successfully, a failure occurs at mobile device T2 subsequent to successful reconfiguration of the other mobile devices T1, T3 to T6. The failure is indicated to mobile devices T1, T3 to T6 using failure signaling, e.g., a failure signal or message. At point of time t₀+t, all participating mobile devices T1 to T6 will decide on fallback to the initial software version due to failure of the reconfiguration process at mobile devices T2. Alternatively, the same decision may be taken already at receipt of the failure indication from mobile device T2.

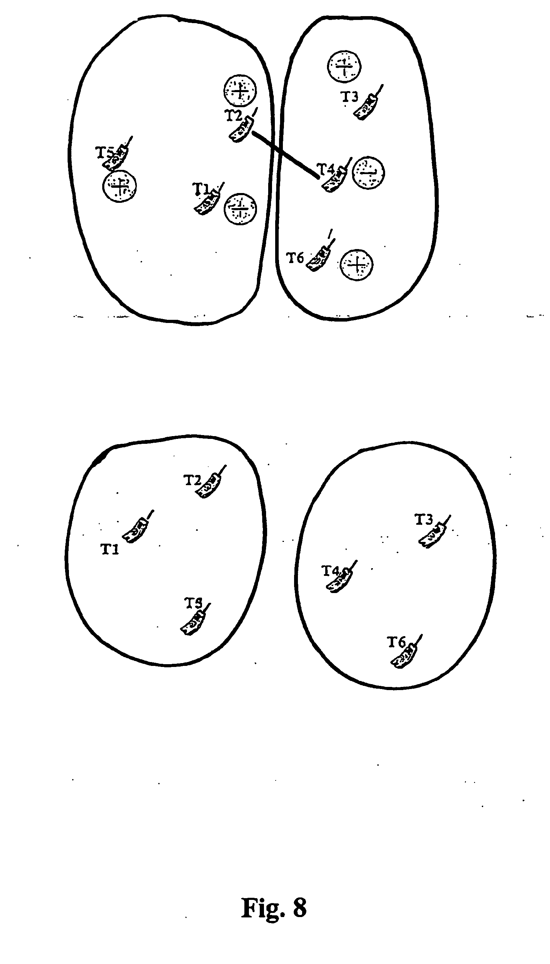

Fig. 8 shows a second example of the application of the reconfiguration process according to the present invention. For the example shown in Fig. 8 it is assumed that different network nodes are mobile devices that may roam during the reconfiguration process.

As shown in Fig. 8, the reconfiguration process for mobile devices T2, T3, and T6 is executed successfully, while the reconfiguration process at mobile device T4 fails. In addition, shortly before end of the time period reserved for preparing the transition to the target software configuration, connectivity between mobile devices T2 and T4 is lost, splitting the initial ad-hoc network T1 to T6 into partial ad-hoc networks, T1, T2, T5, and T3, T4, and T6.

The reconfiguration process is successful for the first partial ad-hoc network T1, T2, T5, and therefore the first partial ad-hoc network will commit to the target software configuration. To the contrary, the second partial ad-hoc network will execute a fallback to the initial software configuration due to failure of reconfiguration process in mobile device T4.

While in Figs. 7 and 8 examples have been shown where communication is possible during the first time period of the reconfiguration for decision on commitment to the new software, an alternative would be that communication is fully interrupted during the reconfiguration process. In the latter case, the reconfiguration result indication related exchange of information would be postponed until expiry of the time period t reserved for software reconfiguration.

## Claims

1. Method of reconfiguration for a network node in an ad-hoc network, comprising the step:
preparing a transition from an initial software configuration to a target software configuration;
***characterized by***
deciding on commitment to the target software configuration in view of a result of reconfiguration in at least one further network node in the ad-hoc network; wherein the step of committing to the target software configuration is taken when every result of reconfiguration received at the network node from any reachable further network node is evaluated to be positive.

2. Method according to claim 1, ***characterized in that*** it further comprises a step of negotiating a maximum reconfiguration time period with at least one further network node before executing the transition from the initial software configuration to the target software configuration.

3. Method according to claims 1 or 2, ***characterized in that*** it further comprises a step of coordinating a start of reconfiguration at the network node with a start of reconfiguration in at least one further network node.

4. Method according to one of the claims 1 to 3,
***characterized in that*** it further comprises a step of determining network nodes being reachable from the reconfigured network node when ad-hoc network communication is interrupted during the transition from the initial software configuration to the target software configuration.

5. Method according to one of the claims 1 to 4,
***characterized in that*** it further comprises a step of falling back to the initial software configuration when at least one result of reconfiguration received at the network node from a reachable further network node is evaluated to be negative.

6. Method according to one of the claims 1 to 5,
***characterized in that*** it comprises a step of falling back to the initial software configuration when no result of reconfiguration result is received at the network node until expiry of the maximum reconfiguration time period.

7. Method according to one of the claims 1 to 6,
***characterized in that*** it further comprises a step of sending a positive reconfiguration result when the transition from the initial software configuration to the target software configuration is successful.

8. Method according to one of the claims 1 to 7,
***characterized in that*** it further comprises a step of sending a negative reconfiguration result when the transition from the initial software configuration to the target software configuration is not successful.

9. Method according to one of the claims 1 to 8,
***characterized in that*** it further comprises a step of retrieving software for executing the transition from the initial software configuration to the target software configuration locally from a portable electronic device

10. Method according to one of the claims 1 to 9,
***characterized in that*** it further comprises a step of retrieving software for executing the transition from the initial software configuration to the target software configuration remotely via a mobile communication environment.

11. Method according to claims 9 or 10, ***characterized in that*** it further comprises a step of pre-installing software for executing the transition from the initial software configuration to the target software configuration in the network node.

12. Network node for operation in an ad-hoc network, comprising:
a software reconfiguration unit adapted to prepare a transition from an initial software configuration to a target software configuration;
**characterized by**
a reconfiguration commitment unit adapted to decide on commitment to the target software configuration in view of a result of reconfiguration in at least one further network node in the ad-hoc network;
wherein the reconfiguration commitment unit is adapted to commit to the target software configuration when every result of reconfiguration received at the network node from any reachable further network node is evaluated to be positive.

13. Network node according to claim 12, ***characterized in that*** it further comprises a negotiating unit adapted to negotiate a maximum reconfiguration time period with the at least one further network node before executing the transition from the initial software configuration to the target software configuration.

14. Network node according to claim 12 or 13, ***characterized in that*** it further comprises a reconfiguration coordination unit adapted to coordinate a start of reconfiguration at the network node with a start of reconfiguration in the at least one further network node.

15. Network node according to one of the claims 12 to 14,
***characterized in that*** it further comprises a connectivity unit adapted to determine network nodes being reachable from the reconfigured network node when ad-hoc network communication is interrupted during the transition from the initial software configuration to the target software configuration.

16. Network node according to one of the claims 12 to 15,
***characterized in that*** the reconfiguration commitment unit is adapted to decide on falling back to the initial software configuration when at least one result of reconfiguration received at the network node from a reachable further network node is evaluated to be negative.

17. Network node according to one of the claims 12 to 16,
***characterized in that*** the reconfiguration commitment unit is adapted to decide on falling back to the initial software configuration when no result of reconfiguration result is received at the network node until expiry of the maximum reconfiguration time period.

18. Network node according to one of the claims 12 to 17,
***characterized in that*** it further comprises a communication unit adapted to send a positive reconfiguration result when the transition from the initial software configuration to the target software configuration is successful.

19. Network node according to one of the claims 12 to 17,
***characterized in that*** it further comprises a communication unit adapted to send a negative reconfiguration result when the transition from the initial software configuration to the target software configuration is not successful.

20. Network node according to one of the claims 12 to 19,
**characterized *in that*** it further comprises a software retrieval unit adapted to retrieve software for executing the transition from the initial software configuration to the target software configuration locally from a portable electronic device.

21. Network node according to one of the claims 12 to 20,
***characterized in that*** the software retrieval unit is further adapted to retrieve software for executing the transition from the initial software configuration to the target software configuration remotely via a mobile communication environment.

22. A computer program product directly loadable into the internal memory of a network node of an ad-hoc network, comprising software code portions for performing the steps of one of the claims 1 to 11, when the product is run on a processor of the network node.

## Patentansprüche

1. Verfahren einer Neukonfiguration für einen Netzwerkknoten in einem Ad-Hoc-Netzwerk, mit dem Schritt:
Vorbereiten eines Übergangs von einer anfänglichen Softwarekonfiguration zu einer Ziel-Softwarekonfiguration;
**gekennzeichnet durch**
Entscheiden auf Übergabe zu der Ziel-Softwarekonfiguration in Anbetracht eines Ergebnisses der Neukonfiguration in zumindest einem weiteren Knoten in dem Ad-Hoc-Netzwerk; wobei der Schritt des Übergebens zu der Ziel-Softwarekonfiguration unternommen wird, wenn jedes Ergebnis der Neukonfiguration, das an dem Netzwerkknoten von einem erreichbaren weiteren Netzwerknoten empfangen wird, als positiv bewertet wird.

2. Verfahren nach Anspruch 1, **dadurch gekennzeichnet, dass** es weiter einen Schritt eines Verhandelns eines maximalen Neukonfigurationszeitraums mit zumindest einem weiteren Netzwerkknoten umfasst, bevor der Übergang von der von der anfänglichen Softwarekonfiguration zu der Ziel-Softwarekonfiguration durchgeführt wird.

3. Verfahren nach Anspruch 1 oder 2, **dadurch gekennzeichnet, dass** es weiter einen Schritt eines Koordinierens eines Starts der Neukonfiguration bei dem Netzwerkknoten mit einem Start der Neukonfiguration in zumindest einem weiteren Netzwerkknoten umfasst.

4. Verfahren nach einem der Ansprüche 1 bis 3, **dadurch gekennzeichnet, dass** es weiter einen Schritt eines Bestimmens von Netzwerkknoten umfasst, die erreichbar von dem neukonfigurierten Netzwerkknoten sind, wenn eine Ad-Hoc-Netzwerk-Kommunikation während des Übergangs von der anfänglichen Softwarekonfiguration zu der Ziel-Softwarekonfiguration unterbrochen wird.

5. Verfahren nach einem der Ansprüche 1 bis 4, **dadurch gekennzeichnet, dass** es weiter einen Schritt eines Zurückfallens zu der anfänglichen Software-Konfiguration umfasst, wenn zumindest ein Ergebnis der Neukonfiguration, das an dem Netzwerkknoten von einem erreichbaren weiteren Netzwerknoten empfangen wird, als negativ bewertet wird.

6. Verfahren nach einem der Ansprüche 1 bis 5, **dadurch gekennzeichnet, dass** es weiter einen Schritt eines Zurückfallens zu der anfänglichen Software-Konfiguration umfasst, wenn kein Ergebnis der Neukonfiguration an dem Netzwerkknoten von einem erreichbaren, weiteren Netzwerknoten bis zum Ablauf des maximalen Neukonfigurationszeitraumes empfangen wird.

7. Verfahren nach einem der Ansprüche 1 bis 6, **dadurch gekennzeichnet, dass** es weiter einen Schritt eines Sendens eines positiven Neukonfigurationsergebnisses umfasst, wenn der Übergang von der anfänglichen Softwarekonfiguration zu der Ziel-Softwarekonfiguration erfolgreich ist.

8. Verfahren nach einem der Ansprüche 1 bis 7, **dadurch gekennzeichnet, dass** es weiter einen Schritt eines Sendens eines negativen Neukonfigurationsergebnisses umfasst, wenn der Übergang von der anfänglichen Softwarekonfiguration zu der Ziel-Softwarekonfiguration nicht erfolgreich ist.

9. Verfahren nach einem der Ansprüche 1 bis 8, **dadurch gekennzeichnet, dass** es weiter einen Schritt eines Abrufens von Software zum Ausführen des Übergangs von der anfänglichen Softwarekonfiguration zu der Ziel-Softwarekonfiguration lokal von einem tragbaren elektronischen Gerät umfasst.

10. Verfahren nach einem der Ansprüche 1 bis 9, **dadurch gekennzeichnet, dass** es weiter einen Schritt eines Abrufens von Software zum Ausführen des Übergangs von der anfänglichen Softwarekonfiguration zu der Ziel-Softwarekonfiguration entfernt gelegen über eine mobile Kommunikationsumgebung umfasst.

11. Verfahren nach Anspruch 9 oder 10, **dadurch gekennzeichnet, dass** es weiter einen Schritt eines Vorinstallierens von Software zum Ausführen des Übergangs von der anfänglichen Softwarekonfiguration zu der Ziel-Softwarekonfiguration umfasst.

12. Netzwerkknoten zum Betrieb in einem Ad-Hoc-Netzwerk mit:
einer Software-Neukonfigurationseinheit, die angepasst ist, einen Übergang von einer anfänglichen Softwarekonfiguration zu einer Ziel-Softwarekonfiguration vorzubereiten;
**gekennzeichnet durch**
eine Neukonfigurations-Übergabeeinheit, die angepasst ist, auf Übergabe zu der Ziel-Softwarekonfiguration in Anbetracht eines Ergebnisses der Neukonfiguration in zumindest einem weiteren Knoten in dem Ad-Hoc-Netzwerk zu entscheiden;
wobei die Neukonfigurations-Übergabeeinheit angepasst ist, zu der Ziel-Softwarekonfiguration zu übergeben, wenn jedes Ergebnis der Neukonfiguration, das an dem Netzwerkknoten von einem erreichbaren weiteren Netzwerknoten empfangen wird, als positiv bewertet wird.

13. Netzwerknoten nach Anspruch 12, **dadurch gekennzeichnet, dass** dieser weiter einen verhandelnde Einheit umfasst, die angepasst ist, einen maximalen Neukonfigurationszeitraums mit zumindest einem weiteren Netzwerkknoten zu verhandeln, bevor der Übergang von der von der anfänglichen Softwarekonfiguration zu der Ziel-Softwarekonfiguration durchgeführt wird.

14. Netzwerknoten nach Anspruch 12 oder 13, **dadurch gekennzeichnet, dass** dieser weiter eine Neukonfigurations-Koordinationseinheit umfasst, die angepasst ist, einen Start der Neukonfiguration bei dem Netzwerkknoten mit einem Start der Neukonfiguration in zumindest einem weiteren Netzwerkknoten zu koordinieren.

15. Netzwerknoten nach einem der Ansprüche 12 bis 14, **dadurch gekennzeichnet, dass** dieser weiter eine Verbindungseinheit umfasst, die angepasst ist, Netzwerkknoten, die erreichbar von dem neukonfigurierten Netzwerkknoten sind, zu bestimmen, wenn eine Ad-Hoc-Netzwerk-Kommunikation während des Übergangs von der anfänglichen Softwarekonfiguration zu der Ziel-Softwarekonfiguration unterbrochen wird.

16. Netzwerknoten nach einem der Ansprüche 12 bis 15, **dadurch gekennzeichnet, dass** die Neukonfigurationsübergabeeinheit angepasst ist, zu entscheiden, zu der anfänglichen Software-Konfiguration zurückzufallen, wenn zumindest ein Ergebnis der Neukonfiguration, das an dem Netzwerkknoten von einem erreichbaren weiteren Netzwerknoten empfangen wird, als negativ bewertet wird.

17. Netzwerknoten nach einem der Ansprüche 12 bis 16, **dadurch gekennzeichnet, dass** die Neukonfigurationsübergabeeinheit angepasst ist, zu entscheiden, zu der anfänglichen Software-Konfiguration zurückzufallen, wenn kein Ergebnis der Neukonfiguration, an dem Netzwerkknoten von einem erreichbaren weiteren Netzwerknoten bis zum Ablauf des maximalen Neukonfigurationszeitraumes empfangen wird.

18. Netzwerknoten nach einem der Ansprüche 12 bis 17, **dadurch gekennzeichnet, dass** dieser weiter eine Kommunikationseinheit umfasst, die angepasst ist, ein positives Neukonfigurationsergebnis zu senden, wenn der Übergang von der anfänglichen Softwarekonfiguration zu der Ziel-Softwarekonfiguration erfolgreich ist.

19. Netzwerknoten nach einem der Ansprüche 12 bis 17, **dadurch gekennzeichnet, dass** dieser weiter eine Kommunikationseinheit umfasst, die angepasst ist, ein negatives Neukonfigurationsergebnis zu senden, wenn der Übergang von der anfänglichen Softwarekonfiguration zu der Ziel-Softwarekonfiguration nicht erfolgreich ist.

20. Netzwerknoten nach einem der Ansprüche 12 bis 19, **dadurch gekennzeichnet, dass** dieser weiter eine Abrufeinheit umfasst, die angepasst ist, Software zum Ausführen des Übergangs von der anfänglichen Softwarekonfiguration zu der Ziel-Softwarekonfiguration lokal von einem tragbaren elektronischen Gerät auszuführen.

21. Netzwerknoten nach einem der Ansprüche 12 bis 20, **dadurch gekennzeichnet, dass** die Abrufeinheit weiter angepasst ist, Software zum Ausführen des Übergangs von der anfänglichen Softwarekonfiguration zu der Ziel-Softwarekonfiguration entfernt gelegen über eine mobile Kommunikationsumgebung auszuführen.

22. Computer-Programprodukt, das direkt in dem internen Speicher eines Computers eines Netzwerkknotens eines Ad-hoc-Netzwerkes ladbar ist, mit Softwarecode-Teilen zum Durchführen der Schritte von einem der Ansprüche 1 bis 11, wenn das Produkt auf einem Computer laufen gelassen wird.

## Revendications

1. Procédé de reconfiguration pour un noeud de réseau dans un réseau ad hoc, comprenant l'étape de :
préparation d'un passage d'une configuration logicielle initiale à une configuration logicielle cible ;
***caractérisé par***
la décision de l'exécution du passage à la configuration logicielle cible, eu égard à un résultat d'une reconfiguration dans au moins un autre noeud de réseau dans le réseau ad hoc ; dans lequel l'étape de décision de l'exécution du passage à la configuration logicielle cible est effectuée lorsque chaque résultat de reconfiguration, reçu au niveau du noeud de réseau en provenance de tout autre noeud accessible du réseau, est évalué comme étant positif.

2. Procédé selon la revendication 1, ***caractérisé en ce qu*'**il comprend en outre une étape de négociation d'une période maximale de temps de reconfiguration, avec au moins un autre noeud de réseau avant de procéder au passage de la configuration logicielle initiale à la configuration logicielle cible.

3. Procédé selon la revendication 1 ou 2, ***caractérisé en ce qu*'** il comprend en outre une étape de coordination d'un début de reconfiguration au niveau du noeud de réseau avec un début de reconfiguration dans au moins un autre noeud de réseau.

4. Procédé selon l'une quelconque des revendications 1 à 3, ***caractérisé en ce qu*'**il comprend en outre une étape de détermination de noeuds de réseau, qui sont accessibles à partir du noeud reconfiguré de réseau lorsqu'une communication du réseau ad hoc est interrompue pendant le passage de la configuration logicielle initiale à la configuration logicielle cible.

5. Procédé selon l'une quelconque des revendications 1 à 4, ***caractérisé en ce qu*'**il comprend en outre une étape de retour à la configuration logicielle initiale lorsqu'au moins un résultat de reconfiguration, reçu au niveau du noeud de réseau en provenant d'un autre noeud de réseau accessible, est évalué comme étant négatif.

6. Procédé selon l'une quelconque des revendications 1 à 5, ***caractérisé en ce qu*'**il comprend en outre une étape de retour à la configuration logicielle initiale lorsque aucun résultat de reconfiguration n'est reçu au niveau du noeud de réseau avant l'expiration de la période maximale de temps de reconfiguration.

7. Procédé selon l'une quelconque des revendications 1 à 6, ***caractérisé en ce qu*'**il comprend en outre une étape d'envoi d'un résultat positif de reconfiguration lorsque le passage de la configuration logicielle initiale à la configuration logicielle cible a abouti.

8. Procédé selon l'une quelconque des revendications 1 à 7, ***caractérisé en ce qu*'**il comprend en outre une étape d'envoi d'un résultat négatif de reconfiguration lorsque le passage de la configuration logicielle initiale à la configuration logicielle cible n'a pas abouti.

9. Procédé selon l'une quelconque des revendications 1 à 8, ***caractérisé en ce qu*'**il comprend en outre une étape d'accès à un logiciel pour l'exécution du passage de la configuration logicielle initiale à la configuration logicielle, localement à partir d'un dispositif électronique portable.

10. Procédé selon l'une quelconque des revendications 1 à 9, ***caractérisé en ce qu'***il comprend en outre une étape d'accès à un logiciel pour l'exécution du passage de la configuration logicielle initiale à la configuration logicielle cible, à distance par l'intermédiaire d'un environnement de télécommunications de service mobile.

11. Procédé selon la revendication 9 ou 10, ***caractérisé en ce qu*'**il comprend en outre une étape d'installation préalable de logiciel pour l'exécution du passage de la configuration logicielle initiale à la configuration logicielle cible dans le noeud de réseau.

12. Noeud de réseau prévu pour un fonctionnement dans un réseau ad hoc, comprenant :
une unité de reconfiguration logicielle, propre à préparer un passage d'une configuration logicielle initiale à une configuration logicielle cible ;
***caractérisé par***
une unité d'exécution de reconfiguration, propre à décider de l'exécution du passage à la configuration logicielle cible, eu égard à un résultat d'une reconfiguration, dans au moins un autre noeud de réseau dans le réseau ad hoc ;
dans lequel l'unité d'exécution de reconfiguration est propre à exécuter le passage à la configuration logicielle cible lorsque chaque résultat de reconfiguration, reçu au niveau du noeud de réseau en provenance d'un autre noeud accessible quelconque du réseau, est évalué comme étant positif.

13. Noeud de réseau selon la revendication 12, ***caractérisé en ce qu'***il comprend en outre une unité de négociation, propre à négocier une période maximale de temps de reconfiguration, avec au moins un autre noeud de réseau avant de procéder au passage de la configuration logicielle initiale à la configuration logicielle cible.

14. Noeud de réseau selon la revendication 12 ou 13, ***caractérisé en ce qu'***il comprend en outre une unité de coordination de reconfiguration, propre à coordonner un début de reconfiguration au niveau du noeud réseau avec un début de reconfiguration dans ledit au moins un autre noeud de réseau.

15. Noeud de réseau selon l'une quelconque des revendications 12 à 14, ***caractérisé en ce qu*'**il comprend en outre une unité de connectabilité, propre à déterminer des noeuds de réseau, qui sont accessibles à partir du noeud reconfiguré de réseau lorsqu'une communication du réseau ad hoc est interrompue pendant le passage de la configuration logicielle initiale à la configuration logicielle cible.

16. Noeud de réseau selon l'une quelconque des revendications 12 à 15, ***caractérisé en ce que*** l'unité d'exécution de reconfiguration est propre à décider de retourner à la configuration logicielle initiale lorsqu'au moins un résultat de reconfiguration, reçu au niveau du noeud de réseau en provenance d'un autre noeud de réseau accessible, est évalué comme étant négatif.

17. Noeud de réseau selon l'une quelconque des revendications 12 à 16, ***caractérisé en ce que*** l'unité d'exécution de reconfiguration est propre à décider de retourner à la configuration logicielle initiale lorsque aucun résultat de reconfiguration n'est reçu au niveau du noeud de réseau avant l'expiration de la période maximale de temps de reconfiguration.

18. Noeud de réseau selon l'une quelconque des revendications 12 à 17, ***caractérisé en ce qu*'**il comprend en outre une unité de communication, propre à envoyer un résultat positif de reconfiguration lorsque le passage de la configuration logicielle initiale à la configuration logicielle cible a abouti.

19. Noeud de réseau selon l'une quelconque des revendications 12 à 17, ***caractérisé en ce qu*'**il comprend en outre une unité de communication, propre à envoyer un résultat négatif de reconfiguration lorsque le passage de la configuration logicielle initiale à la configuration logicielle cible n'a pas abouti.

20. Noeud de réseau selon l'une quelconque des revendications 12 à 19, ***caractérisé en ce qu*'**il comprend en outre une unité d'accès à un logiciel, propre à accéder à un logiciel pour l'exécution du passage de la configuration logicielle initiale à la configuration logicielle, localement à partir d'un dispositif électronique portable.

21. Noeud de réseau selon l'une quelconque des revendications 12 à 20, ***caractérisé en ce que*** l'unité d'accès à un logiciel est en outre propre à accéder à un logiciel pour l'exécution du passage de la configuration logicielle initiale à la configuration logicielle cible, à distance par l'intermédiaire d'un cadre de télécommunications du service mobile.

22. Produit programme informatique, chargeable directement dans la mémoire interne d'un noeud de réseau d'un réseau ad hoc, comprenant des parties de code logiciel pour l'exécution des étapes selon l'une quelconque des revendications 1 à 11, lorsque le produit passe sur un processeur du noeud de réseau.
